# EUROPEAN PATENT APPLICATION

(11) **EP 4 322 262 A1**
(43) Date of publication of application: **14.02.2024**
(21) Application number: 22931262.4
(22) Date of filing: 16.06.2022
(51) Int. Cl.: H01M 4/62, C09D 125/14, C08F 2/24

(54) **STYRENE ACRYLIC EMULSION AND PREPARATION METHOD THEREFOR, NEGATIVE ELECTRODE SHEET, SECONDARY BATTERY, AND ELECTRICAL DEVICE**

(71) Applicant: Contemporary Amperex Technology Co., Limited, Ningde, Fujian 352100 (CN)
(72) Inventor: WU, Qifan, Ningde, Fujian 352100 (CN); ZHANG, Ming, Ningde, Fujian 352100 (CN)
(74) Representative: Kraus & Lederer PartGmbB
(86) International application number: PCT/CN2022/099153
(87) International publication number: WO 2023/240535

(57) **Abstract**

The present application relates to a styrene-acrylic emulsion, an anode plate and a preparation method therefor, a secondary battery and an electric device. A Dv50 particle size of a latex particle in the styrene-acrylic emulsion is 350-900 nm, optionally 350-800 nm. The anode plate includes an anode current collector; and an anode active material layer disposed on at least one surface of the anode current collector, the anode active material layer includes a hard carbon material and a binder, the binder is derived from the above-mentioned styrene-acrylic emulsion.

## Description

### TECHNICAL FIELD

The present application relates to the technical field of secondary batteries, and in particular, to a styrene-acrylic emulsion and a preparation method thereof, an anode plate, a secondary battery and an electric device.

### BACKGROUND

Secondary batteries are widely used in all kinds of consumer electronic products and electric vehicles because of their outstanding features such as light weight, non-pollution and no memory effect.

Hard carbon materials can be used as anode active materials in commonly used secondary batteries, such as lithium-ion batteries and sodium-ion batteries. Hard carbon material has the advantages of lower storage voltage, higher capacity and good cycle stability, and also has the advantages of abundant sources, simple preparation process, etc. It is one of the most promising anode materials, and there is a large application market for lithium-ion batteries and sodium-ion batteries.

### SUMMARY

In view of the technical problems in the related technologies, the present application provides an anode plate containing a hard carbon material capable of combining good binding capability, cohesion, and flexibility, and is intended to enable a secondary battery containing the same to have good cycle stability.

In order to achieve the above objectives, a first aspect of the present application provides a styrene-acrylic emulsion, and a Dv50 particle size of a latex particle in the styrene-acrylic emulsion is 350-900 nm, optionally 350-800 nm.

In any embodiment of the present application, the latex particle is a styrene acrylate copolymer, the styrene acrylate copolymer has a glass transition temperature in a range of 10-70°C, optionally 10-60°C.

A second aspect of the present application provides a preparation method of the styrene-acrylic emulsion provided in the first aspect of the present application, including the steps of:
preparing a pre-emulsion by mixing a portion of an emulsifier, a portion of an acrylate-based monomer, and a portion of a styrene-based monomer with water;
preparing a seed emulsion by mixing another portion of the emulsifier, another portion of the acrylate-based monomer, and another portion of the styrene-based monomer with water, and adding an initiator to initiate polymerization; and
adding the pre-emulsion to the seed emulsion dropwise and adding an initiator to carry out a polymerization reaction to produce a styrene-acrylic emulsion having a latex particle with a Dv50 particle size of 350-900 nm;
a total mass of the emulsifier is 0.7%-5% of a total mass of monomers for the preparation, optionally 1%-4.5%; the monomers for the preparation include the acrylate-based monomer and the styrene-based monomer.

In any embodiment of the present application, with respect to the total mass of the monomers for the preparation, the styrene-acrylic emulsion includes 30%-80% by mass of the styrene-based monomer, 20%-70% by mass of the acrylate-based monomer and 0-10% by mass of a functional monomer;
optionally, the functional monomer is added in the step of preparing the pre-emulsion and/or the seed emulsion;
optionally, the functional monomer is at least one of an acrylic-based monomer, an organophosphate monomer and a fluorinated acrylate-based monomer.

A third aspect of the present application provides an anode plate, including:
an anode current collector; and
an anode active material layer disposed on at least one surface of the anode current collector, where the anode active material layer includes a hard carbon material and a binder, the binder is derived from the styrene-acrylic emulsion provided in the first aspect of the present application.

In any embodiment of the present application, components of the anode active material layer further include a conductive agent and a dispersant; the hard carbon material accounts for 85%-97% by mass, the styrene acrylate copolymer accounts for 1%-8% by mass, the conductive agent accounts for 0.3%-5% by mass, and the dispersant accounts for 0.5%-4% by mass of the anode active material layer.

In any embodiment of the present application, the anode active material layer has a coating weight of 2-13 mg/cm², optionally 5-12 mg/cm².

In any embodiment of the present application, a morphology of the hard carbon material is at least one of an irregular particle, a spherical particle and a quasi-spherical particle, optionally, the hard carbon material is an irregular particle.

In any embodiment of the present application, the hard carbon material has a Dv50 particle size of 1-10 µm, optionally 4-9 µm.

In any embodiment of the present application, a morphology of the hard carbon material is an irregular particle and a binding force between the anode active material layer and the anode current collector is 10-40 N/m; a cohesive force of the anode active material layer is in a range of 150-800 N/m.

In any embodiment of the present application, the hard carbon material is at least one of a spherical particle and a quasi-spherical particle, and a binding force between the anode active material layer and the anode current collector is 10-30 N/m; a cohesive force of the anode active material layer is in a range of 150-600 N/m.

A fourth aspect of the present application provides a secondary battery including the anode plate provided in the third aspect of the present application.

A fifth aspect of the present application provides an electric device including the secondary battery provided in the fourth aspect of the present application.

Relative to the existing technologies, the present application includes at least the advantageous effects as follows:

The present application provides a styrene-acrylic emulsion with a Dv50 particle size of 350-900 nm and creatively uses it as a binder to improve the binding capability, cohesion and flexibility of the anode plate made from hard carbon material as the anode active material. In the present application, the hard carbon material is used as the anode active material in the anode active material layer, and the styrene acrylate copolymer having a latex particle with a specific range of Dv50 particle size is used as the binder in the anode active material layer. Since the latex particles in the styrene-acrylic emulsion as a binder have a large particle size and good dispersion without agglomeration, the effective binding between the hard carbon material and the anode current collector and within the hard carbon material can be effectively improved, and this can improve the binding force between the hard carbon material and the anode current collector and the cohesion within the hard carbon material. Thus, the above anode plate can not only improve the binding force between the anode active material layer and the anode current collector and the cohesive force of the anode active material layer, but also has excellent flexibility, so that the high binding force and flexibility of the anode plate can be maintained even when the anode active material layer has a high coating weight. The above anode plate of the present application is applied to a secondary battery to ensure the stability of performances of the anode plate without affecting the energy capabilities of the battery, so that the secondary battery has better cycle stability.

### BRIEF DESCRIPTION OF THE DRAWINGS

In order to more clearly illustrate the technical proposals of the present application, the accompanying drawings used in the present application will be briefly described below. Obviously, the accompanying drawings described below are only some embodiments of the present application. For those of ordinary skill in the art, other accompanying drawings can be obtained according to the accompanying drawings without making creative efforts.
FIG. 1 is a scanning electron microscope image of the anode plate prepared in one embodiment of the present application;
FIG. 2 is a schematic diagram of an embodiment of a secondary battery;
FIG. 3 is an exploded view of FIG. 2;
FIG. 4 is a schematic diagram of an embodiment of the battery module;
FIG. 5 is a schematic diagram of an embodiment of the battery pack;
FIG. 6 is an exploded view of FIG. 5; and
FIG. 7 is a schematic diagram of an embodiment of an electric device in which a secondary battery is used as a power source.

Reference numbers in the drawings are as follows:

1, battery pack; 2, upper container body; 3, lower container body; 4, battery module; 5, secondary battery; 51, casing; 52, electrode assembly; 53, cover plate; and 6, electric device.

### DETAILED DESCRIPTION OF THE EMBODIMENTS

The present application is further described below in conjunction with specific embodiments. It should be understood that these specific embodiments are intended to illustrate the present application only and are not intended to limit the scope of the present application.

For brevity, only some numerical ranges are specifically disclosed herein. However, any lower limit may be combined with any upper limit to form an unspecified range; and any lower limit may be combined with other lower limits to form an unspecified range, and similarly any upper limit may be combined with any other upper limit to form an unspecified range. In addition, each individually disclosed point or individual value may itself be used as a lower or upper limit in combination with any other point or individual value or in combination with other lower or upper limits to form an unspecified range.

In the description herein, it should be noted that unless otherwise stated, "above" and "below" are inclusive of the present number, and "more" in the term "one or more" means two or more.

In the descriptions herein, the term "or" is inclusive unless otherwise stated. That is, the phrase "A or B" means "A, B, or both A and B". More specifically, the condition "A or B" is satisfied by either: A is true (or present) and B is false (or absent); A is false (or absent) and B is true (or present); or both A and B are true (or present). Unless otherwise stated, terms used in the present application have a well-known meaning as commonly understood by those skilled in the art. Unless otherwise stated, the values of each parameter mentioned in the present application may be measured by various measurement methods commonly used in the art (e.g., the tests may be performed according to the methods given in the embodiments of the present application).

Hard carbon materials are the anode active materials for secondary batteries, which are characterized by dispersed hard carbon crystals, large lattice spacing, chemical bonding between lamellae, the mechanical riveting connection between hard carbon particles, and large specific surface area. However, these characteristics of hard carbon particles lead to a very low binding force of a hard-carbon anode plate, especially when the anode active material layer has a large coating weight, which makes the anode plate prone to carbon deintercalation during the coating process, hindering normal production process.

Some current technologies have tried to improve the binding force of anode plates containing hard carbon materials. For example, water-soluble binders such as polyacrylamide copolymers with high binding strength are used, but this method leads to high stiffness and brittleness of the anode plate, which brings problems of breakage in cold-pressing and cracking in the winding process, also, this method has limited improvement of the binding strength. There are also technologies that increase the binding force of the anode plate by significantly increasing the amount of the binder, but the increase in the amount of the binder results in a loss of energy density of the battery. In addition, some traditional binders, such as styrene butadiene rubber (SBR), water-based acrylic resin, polyvinylidene fluoride (PVDF), polytetrafluoroethylene (PTFE), ethylene-vinyl acetate copolymer (EVA), polyvinyl alcohol (PVA) and polyvinyl butyral(PVB), are unable to solve the above-mentioned problems. Therefore, there remains an urgent problem of making the anode plate containing a hard carbon material to possess a combination of good binding capability, cohesion and flexibility.

### [Styrene-acrylic Emulsion]

The present application provides a styrene-acrylic emulsion, which is used as a binder for the anode active material layer, and can solve the problem of making the hard carbon material, as an anode material for the anode active material, to possess better binding capability, cohesion and flexibility.

The present application provides a styrene-acrylic emulsion in which a latex particle has a Dv50 particle size of 350-900 nm. The latex particle is a styrene acrylate copolymer.

Generally, at present, in order to ensure the high stability of the styrene-acrylic emulsion for the purpose of long-term storage, most of the latex particles in styrene-acrylic emulsion have a Dv50 particle size of 300 nm or less, and the conventional idea of improving the binding of anode plate is to reduce the particle size of the emulsion-type binder, increasing the specific surface area, to improve the binding of the electrode plate.

The styrene acrylate copolymer in the styrene-acrylic emulsion provided in the present application is spherical, which has a larger particle size such as the Dv50 particle size of the present application of 350-900 nm and is stable. By using the styrene acrylate copolymer having a latex particle with a specific Dv50 particle size range as the binder for the anode active material layer, since the latex particle in the styrene-acrylic emulsion as a binder has a large particle size and good dispersion without agglomeration, the effective binding between the hard carbon material and the anode current collector and within the hard carbon material can be effectively improved, and this can improve the binding force between the hard carbon material and the anode current collector and the cohesion within the hard carbon material. Thus, the above anode plate can not only improve the binding force between the anode active material layer and the anode current collector and the cohesive force of the anode active material layer, but also have excellent flexibility, so that the high binding force and flexibility of the anode plate can be maintained even when the anode active material layer has a high coating weight. The above anode plate of the present application is applied to a secondary battery to ensure the stability of performances of the anode plate without affecting the energy capabilities of the battery, so that the secondary battery has better cycle stability.

The present application also provides a preparation method of a styrene-acrylic emulsion including the following steps S11 to S13.

In Step S11, a pre-emulsification process, a portion of an emulsifier, a portion of an acrylate-based monomer, and a portion of a styrene-based monomer are mixed with water, optionally with the addition of a functional monomer, to produce a uniform, stable, non-layered pre-emulsion.

In some embodiments, the temperature of mixing in step S11 is 30-80°C and the time of mixing is 0.5-2 hrs.

In Step S12, preparation of a seed emulsion, another part of the emulsifier, another part of the acrylate-based monomer and another part of the styrene-based monomer are mixed with water, optionally with the addition of a functional monomer, and then a part of an initiator is added to initiate polymerization to obtain a seed emulsion.

In some embodiments, the temperature of mixing in step S12 is 50-90°C, the time of mixing is 0.1-1 hr, and the seed emulsion is obtained by adding 1/4 of the initiator to initiate the polymerization.

In Step S13, a continuous dropwise addition stage, the pre-emulsion prepared in Step S11 is added dropwise to the seed emulsion prepared in Step S12, and another part of the initiator is added for a polymerization reaction to produce a styrene-acrylic emulsion with a Dv50 particle size of 350-900 nm.

The above monomers for the preparation of the styrene-acrylic emulsion include the acrylate-based monomer and the styrene-based monomer, and optionally contain a functional monomer. As mentioned above, the functional monomer is added during the step of preparing the pre-emulsion and/or seed emulsion. In other words, the functional monomer may be added in the step of preparing the pre-emulsion or the seed emulsion, or in both steps, respectively.

Here, the total mass of the emulsifier is 0.7%-5% of the total mass of the monomers for the preparation. The Dv50 particle size of the latex particle in the styrene-acrylic emulsion may be mainly regulated by regulating the amount of the emulsifier. Further, the mass of the emulsifier is 1%-4.5% of the total mass of the prepared monomer.

In some embodiments, the dropwise addition of the pre-emulsion is controlled to be completed within 1-5 hrs.

In some embodiments, the temperature of the reaction system is controlled to be 50-90°C and the holding time is 1-4 hrs after the addition of the initiator in step S 13 to allow further polymerization of the free monomer that has not been reacted.

Further, the amount of each raw material used in step S11, except for the initiator, is 3/4-2/3 of the total mass of the corresponding raw material. Accordingly, the amount of each raw material used in step S12, except for the initiator, is 1/4-1/3 of the total mass of the corresponding raw material.

The amount of the initiator used in step S12 is 1/4-1/3 of the total mass of the initiator. The amount of the initiator used in step S13 is 3/4-2/3 of the total mass of the initiator.

Further, after adding another part of the initiator for the polymerization reaction, step S13 further includes the steps of: cooling, in which the pH of the system is adjusted to 6-9 using a pH adjuster, and filtering, to obtain a styrene-acrylic emulsion.

In some embodiments, the monomers for the preparation of the styrene-acrylic emulsion include, by mass percentage, 30%-80% of the styrene-based monomer, 20%-70% of the acrylate-based monomer and 0-10% of the functional monomer. The functional monomer is at least one of an acrylic monomer, an organophosphate monomer and a fluorinated acrylate-based monomer. The function of the functional monomer is to increase the stability of the styrene-acrylic emulsion and enhance the mechanical properties of the adhesive film formed by the styrene-acrylic emulsion as a binder.

Further, the monomers for the preparation of the styrene-acrylic emulsion include, by mass percentage, 30%-80% of the styrene-based monomer, 19%-70% of the acrylate-based monomer and 1%-10% of the functional monomer.

The styrene-based monomer includes styrene and its derivatives. Further. The styrene derivatives include alkyl-substituted styrene. In some embodiments, the styrene-based monomer may be selected from styrene and methylstyrene, optionally styrene.

The acrylate-based monomer is a general term for esters of acrylic acid and esters of homologs of acrylic acid. In some embodiments, the acrylate-based monomer may be at least one selected from C1-C16 alkyl acrylate and C1-C16 alkyl methacrylate. The acrylate-based monomer includes, but is not limited to, at least one of: methyl acrylate, methyl methacrylate, ethyl acrylate, ethyl methacrylate, butyl acrylate, butyl methacrylate, hexyl acrylate, hexyl methacrylate, isooctyl acrylate, isooctyl methacrylate, n-butyl acrylate, isobutyl acrylate, 2-ethylhexyl acrylate, 2-ethylhexyl methacrylate, hydroxypropyl acrylate hydroxyethyl acrylate, N,N-dimethylamine ethyl acrylate, N,N-dimethylamine propyl methacrylate, N,N-dimethylamine propyl acrylate, N,N-(dimethylamino)ethyl acrylamide, N,N-(dimethylamino)propyl acrylamide, and acrylonitrile.

Further, the acrylate-based monomer is optionally at least one of methyl acrylate, methyl methacrylate and n-butyl acrylate.

In some embodiments, the functional monomer includes at least one of an acrylic monomer, an organophosphate monomer, and a fluorinated acrylate-based monomer.

The acrylic monomer includes at least one of acrylic acid and its homologs, including but not limited to, at least one of methacrylic acid and acrylic acid.

The organophosphate monomer is an ester derivative of phosphoric acid. The organophosphate monomer includes, but is not limited to, at least one of polyfunctional-acidic acrylate phosphate, alkyl acrylate phosphate, ethylene glycol methacrylate phosphate, 2-hydroxyethyl methacrylate phosphate, siloxane phosphate, 2-hydroxyethyl methacrylate phosphate, vinyl alkoxy phosphate (PAM100), methacrylate alkoxy phosphate (PAM200), monofunctional acrylic phosphate (PAM300), hydroxyethyl methacrylate phosphate (PAM4000), alkyl phosphate specialty monomer (PAM5000), COPS-3, alkyl aryl phosphate, aliphatic alcohol (alkylphenol) polyoxyethylene ether phosphate, alkyl alcohol amidophosphate, imidazoline phosphate, hydroxyethyl phosphate, high-molecular-weight polyphosphate, and siloxane phosphate.

The fluorinated acrylate-based monomers are acrylate monomers that contain fluorine. Fluorinated acrylates include, but are not limited to, perfluoroalkyl(meth)acrylates. Perfluoroalkyl(meth)acrylates include, but are not limited to, at least one of: (perfluorooctyl)ethyl acrylate, (perfluorohexyl)ethyl acrylate, and perfluoropolyether methacrylate.

In some embodiments, the functional monomer is at least one selected from methacrylic acid, acrylic acid, (perfluorooctyl)ethyl acrylate, (perfluorohexyl)ethyl acrylate, perfluoropolyether methacrylate, organophosphates like polyfunctional-acidic acrylate phosphate, alkyl acrylate phosphate, ethylene glycol methacrylate phosphate, 2-hydroxyethyl methacrylate phosphate, alkyl phosphate specialty monomer, and siloxane phosphate, organophosphate, 2-hydroxyethyl methacrylate phosphate, vinyl alkoxy phosphate (PAM100), methacrylate alkoxy phosphate (PAM200), monofunctional acrylic phosphate (PAM300), hydroxyethyl methacrylate phosphate (PAM4000), alkyl phosphate specialty monomer (PAM5000), COPS-3, alkyl aryl phosphate, aliphatic alcohol (alkylphenol) polyoxyethylene ether phosphate, alkyl alcohol amidophosphate, imidazoline phosphate, hydroxyethyl phosphate, high-molecular-weight polyphosphate, and siloxane phosphate.

Further, the functional monomer is at least one selected from acrylic acid, acrylate phosphate, and (perfluorooctyl)ethyl acrylate.

In some embodiments, the emulsifier is one selected from a reactive emulsifier, an anionic emulsifier, and a nonionic emulsifier.

Further, reactive emulsifier includes, but is not limited to, at least one or a combination of: allyloxy nonylphenol polyoxyethylene ether ammonium sulfate (KL-100), sodium allyloxy hydroxypropane sulfonate (COPS-1), 2-acrylophthalimido-2-methylpropane sulfonic acid (AMPS), SR-10, 3-allyloxy-1-hydroxy-propane sulfonate, sodium 2-acrylamido-2-methylpropane sulfonate, 3- allyloxy-1-hydroxy-propane phosphate, sodium vinyl sulfonate, sodium salt of fatty alcohol ether vinyl sulfonate, ammonium perfluodecafluorononanoate, sodium dodecyl diphenyl ether disulfonate (2A1), SR-10, ammonium 1-allyloxy-3-(4-nonylphenol)-2-propanol polyoxyethylene(10)ether sulfate, ER-10, and sodium vinyl sulfonate. Further, the reactive emulsifier may be at least one selected from allyloxy nonylphenol polyoxyethylene ether ammonium sulfate (KL-100) and sodium allyloxy hydroxypropane sulfonate (COPS-1).

Further, the anionic emulsifier includes, but is not limited to, one or a combination of: sodium salt of nonylphenol polyether sulfosuccinate (A-103), ammonium salt of nonylphenol ethoxylate sulfate (CO-436), sodium dialkyl sulfate (SLS), sodium dodecyl sulfate (SDS), sodium dodecylbenzene sulfonate (SDBS), ammonium allyl polyoxyethylene ether sulfate, and sodium stearate. Further, the anionic emulsifier may be sodium salt of nonylphenol polyether sulfosuccinate (A-103).

Further, the nonionic emulsifier includes, but is not limited to, one or a combination of: polyoxyethylene sorbitan monolaurate (TW-20), polyoxyethylene sorbitan monooleate (TW-80), polyoxyethylene ether, Span, Tween, allyl polyoxyethylene ether, vinyl polyoxyethylene ether. Optionally, the nonionic emulsifier may be at least one selected from polyoxyethylene sorbitan monolaurate (TW-20) and polyoxyethylene sorbitan monooleate (TW-80).

In some embodiments, the initiator is at least one selected from potassium persulfate, sodium persulfate, and ammonium persulfate.

In some embodiments, the pH adjuster is at least one selected from sodium hydroxide, potassium hydroxide, ammonium hydroxide, N,N-dimethylethanolamine, sodium bicarbonate, and sodium carbonate, optionally sodium hydroxide.

In some embodiments, the resulting styrene-acrylic emulsion has a solid content of 35%-50%, a viscosity of 10 mPa·s-60 mPa·s at 25°C, and a pH of 6-9.

### [Secondary Battery]

A secondary battery refers to a battery that can continue to be used after activating the active material by charging after the battery has been discharged.

Typically, a secondary battery includes a cathode plate, an anode plate, a separator and an electrolyte. During the charging and discharging process of the battery, active ions are intercalated and deintercalated back and forth between the cathode plate and the anode plate. The separator is disposed between the cathode plate and the anode plate to provide isolation. The electrolyte acts as a conductor of ions between the cathode plate and the anode plate.

### [Anode Plate]

In the secondary battery, the anode plate usually includes an anode current collector and an anode active material layer disposed on at least one surface of the anode current collector, and the anode active material layer includes a hard carbon material and a binder, which is derived from the above-mentioned styrene-acrylic emulsion in the present application. In other words, the latex particles (styrene acrylate copolymer) in the above-mentioned styrene-acrylic emulsion are used as the binder, and the latex particles have a Dv50 particle size of 350 nm-900 nm.

Without wishing to be bound by any theory, the anode active material layer of the above-mentioned anode plate in the present application adopts a hard carbon material as the anode active material, and a styrene acrylate copolymer with latex particles having a Dv50 particle size in a specific range is used as the binder of the anode active material layer The styrene acrylate copolymer as the binder has a large particle size and good dispersion without agglomeration, so that the effective binding between the hard carbon material and the anode current collector and within the hard carbon material can be effectively improved, which can improve the binding force between the hard carbon material and the anode current collector and the cohesion within the hard carbon material. Thus, the above anode plate can not only improve the binding force between the anode active material layer and the anode current collector and the cohesive force of the anode active material layer, but also provide excellent flexibility, so that the high binding force and flexibility of the anode plate can be maintained even when the anode active material layer has a high coating weight. The above anode plate of the present application is applied to a secondary battery to ensure the stability of performances of the anode plate without affecting the energy capabilities of the battery, so that the secondary battery has better cycle stability.

The anode current collector may adopt a conventional metal foil or a composite current collector (e.g., a metallic material may be disposed on a polymer substrate to form a composite current collector). As an example, the anode current collector may be made of a copper foil.

The anode active material layer is obtained by coating the anode slurry on the anode current collector, through processes of drying, cold pressing, slitting, and the like. The anode slurry includes a hard carbon material and a styrene-acrylic emulsion of the present application. The hard carbon material is used as the anode active material and the styrene-acrylic emulsion is used as the binder.

The above anode slurry may optionally also include a conductive agent and other optional additives. The above anode slurry is used to form an anode active material layer on the anode current collector. It is understood that the above anode slurry also includes a solvent.

In addition, the preparation process of the above anode plate is simple and low cost.

Optionally, the Dv50 particle size of the styrene acrylate copolymer in the anode plate may be 350 nm, 400 nm, 450 nm, 500 nm, 600 nm, 700 nm, 800 nm, and 900 nm. Further, the Dv50 particle size of the styrene acrylate copolymer in the anode plate is 350 nm-800 nm, the range in which the anode plate has better flexibility, binding force and cohesion, so that the secondary battery has smaller DCR and better cycling performance; a smaller DCR indicates that the battery has better high-current discharge capability, so that the secondary battery has good cycling stability and high-current discharge capability.

In some embodiments, the components of the anode active material layer also include a conductive agent and a dispersant.

Further, in the anode active material layer, the hard carbon material is 85%-97% by mass, the styrene acrylate copolymer is 1%-8% by mass, the conductive agent is 0.3%-5% by mass and the dispersant is 0.5%-4% by mass. Such a combination of hard carbon material and styrene acrylate copolymer can improve the binding force between the anode active material layer and the anode current collector and the cohesion of the anode active material layer without increasing the amount of styrene acrylate copolymer as the binder.

Further, the styrene acrylate copolymer is 2%-5% by mass in the anode active material layer.

In some embodiments, the coating weight of the anode active material layer is 2-13 mg/cm², such as 2 mg/cm², 5 mg/cm², 7 mg/cm², 8 mg/cm², 10 mg/cm², 11 mg/cm², 12 mg/cm², 13 mg/cm². Such a combination of hard carbon material and styrene acrylate copolymer can also be applied to the case where the anode active material layer has a large coating weight so as to meet the requirements of binding and cohesion. Optionally, the coating weight of the anode active material layer is 5-12 mg/cm².

As an example, the conductive agent may be one or more of superconducting carbon, acetylene black, carbon black, Ketjen black, a carbon dot, a carbon nanotube, graphene, and a carbon nanofiber.

As an example, the dispersant may be sodium carboxymethylcellulose, CMC-Na. Further, the anode active material layer may contain other optional additives such as a PTC thermistor material and the like.

In some embodiments, the glass transition temperature Tg of the latex particle (styrene acrylate copolymer) in the adopted styrene-acrylic emulsion is in the range of 10°C-70°C. The glass transition temperature of the styrene acrylate copolymer is related to the monomer ratio of styrene acrylate. Therefore, the glass transition temperature of the styrene acrylate copolymer in the range of 10°C-70°C can be achieved by adjusting the monomer ratio during the preparing process of the styrene-acrylic emulsion.

The inventors of the present application found that the glass transition temperature of the styrene acrylate copolymer is related to the flexibility of the produced anode plate. If the Tg of the styrene acrylate copolymer is too low, there is a risk that the styrene acrylate copolymer will be dissolved when the swelling of the electrolyte is relatively significant, resulting in the anode active material layer becoming less stable in the secondary battery. Whereas if the Tg of styrene acrylate copolymer is large, the anode plate will become hard and brittle, which will also affect the processibility of the battery, such as problems of breakage during cold pressing, rupture during winding, powder falling during die cutting and the like. Therefore, it is preferred to use a styrene acrylate copolymer with a glass transition temperature Tg in the range of 10°C-70°C as the binder, and the produced anode plate not only has good stability, but also has good flexibility, which can fully meet the processing and manufacturing requirements.

Optionally, the glass transition temperature Tg of the styrene acrylate copolymer adopted may be 10°C, 12°C, 15°C, 16°C, 17°C, 18°C, 19°C, 20°C, 25°C, 28°C, 30°C, 40°C, 50°C, 60°C, and 70°C. Further, the glass transition temperature Tg of the latex particles (styrene acrylate copolymer) in the adopted styrene-acrylic emulsion is in the range of 10°C-60°C, in which the produced anode plate has better flexibility, so the produced secondary battery has a smaller DCR and better cycling performance; a smaller DCR indicates better high-current discharge capability, so that the secondary battery can have both good cycling stability and high-current discharge capability.

In some embodiments, the hard carbon material is at least one of irregular particles, spherical particles, and quasi-spherical particles. It is to be noted that the hardness and brittleness problems with a conventional binder are more pronounced and prominent when the hard carbon material is irregular particles, such as particles with angles. The styrene-acrylic emulsion provided in the present application is particularly suitable for improving the adhesion and cohesion of the anode plate having a hard carbon material with such morphology, and the improvement of the adhesion and cohesion is also more obvious by using the styrene-acrylic emulsion as the binder.

Further, the inventors of the present application have conducted extensive research and found that in the above-mentioned anode plate in the present application, in the anode plate prepared using the aforementioned styrene-acrylic emulsion with a Dv50 particle size of 350 nm-900nm as the binder and the irregular particles as the hard carbon material, the binding force between the anode active material layer and the anode current collector is 10 N/m-40 N/m; the cohesive force of the anode active material layer is 150 N/m-800 N/m.

Further, the inventors of the present application have conducted extensive research and found that in the above-mentioned anode plate in the present application, in the anode plate prepared using the aforementioned styrene-acrylic emulsion with a Dv50 particle size of 350 nm-900 nm as the binder and at least one of the spherical particles and the quasi-spherical particles as the hard carbon material, the binding force between the anode active material layer and the anode current collector is 10 N/m-30 N/m; the cohesive force of the anode active material layer is 150 N/m-600 N/m.

Further, the Dv50 particle size of the hard carbon material is 1 µm-10 µm; optionally, it is 4 µm-9 µm.

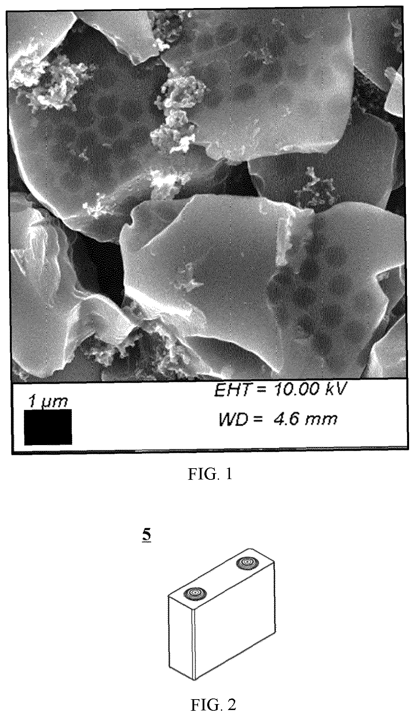

As shown in FIG. 1, in the specific example shown in FIG. 1, a scanning electron microscope (SEM) image of the anode active material layer on an anode plate in a specific example (specifically the anode plate prepared in Example 2 below) is shown, from which it can be seen that the hard carbon material is irregular particles with corners, and a Dv50 particle size thereof is 5 µm, The styrene acrylate copolymer as the binder is cold pressed onto the surface of the hard carbon particles, and a Dv50 particle size of the styrene acrylate copolymer is 450 nm. The dispersion of the styrene acrylate copolymer is excellent as seen in the figure.

The above raw materials are available commercially unless otherwise specified.

### Cathode plate

In a secondary battery, the cathode plate generally includes a cathode current collector and a cathode film layer disposed on the cathode current collector, the cathode film layer includes a cathode active material.

The cathode current collector may be a conventional metal foil or a composite current collector (a metallic material may be arranged on a polymer substrate to form a composite current collector). As an example, the cathode current collector may be made of an aluminum foil.

The specific type of the cathode active material is not limited, and active materials known in the art that can be used in the cathode of secondary batteries may be used, and the person skilled in the art can choose according to the actual needs.

As an example, the cathode active material may include a lithium-ion active material, the lithium-ion active material including, but not limited to, one or more of a lithium transition metal oxide, a lithium-containing phosphate of an olivine structure, and respective modified compounds thereof. Examples of the lithium transition metal oxide may include, but are not limited to, one or more of a lithium cobalt oxide, a lithium nickel oxide, a lithium manganese oxide, a lithium nickel cobalt oxide, a lithium nickel manganese oxide, a lithium nickel cobalt manganese oxide, a lithium nickel cobalt aluminum oxide, and modified compounds thereof. Examples of a lithium-containing phosphate of an olivine structure may include, but are not limited to, one or more of a lithium iron phosphate, a composite of a lithium iron phosphate and carbon, a lithium manganese phosphate, a composite of a lithium manganese phosphate and carbon, a lithium manganese iron phosphate, a composite of a lithium manganese iron phosphate and carbon, and modified compounds thereof. All of these materials are commercially available.

The cathode active material may also include a sodium-ion active material, and the sodium-ion active material may be a cathode active material known in the art for use in sodium-ion batteries. As an example, the sodium-ion active material may include at least one of the following materials: a Prussian blue analog (PBA) type (NaxMA [MB(CN)₆]·zH₂O (MA and MB are transition metal ions)), which is a compound consisting of sodium, a transition metal and cyanogen, such as Na₄Fe₂(CN)₆, Na₄Fe(CN)₆, Na1.72MnFe₂(CN)₆, NaMnMn(CN)₆, NaNiFe(CN)₆, etc.; an oxide type (NaxMO₂ (0 < x ≤ 1, M is a transition metal element)), which consists of transition metal oxides, involving variable-valence transition metals mainly including vanadium (V), chromium (Cr), manganese (Mn), iron (Fe), cobalt (Co), nickel (Ni) and copper (Cu), among which the more abundant manganese and iron are most commonly used, such as NaCrO₂, NaMnO₂, NaMnO₂, Na_{0.61}Ti_{0.48}Mn_{0.52}O₂, Na[Fe_{0.5}Co_{0.5}]O₂, NaMnO₂, Na[Ni_{0.25}Fe_{0.5}Mn_{0.25}]O₂, etc.; and a polyanionic compound (NaₓM_{y}[(XOₘ)ₙ₋]z (M is a metal ion with variable valence; X is an element such as P, S and V)), which consists of sodium, a transition metal such as iron, vanadium and cobalt, and an anion which mainly includes phosphates, pyrophosphates, fluorophosphates and sulfates, such as NaMnFe₂(PO₄)₆, Na₂MnP₂O₇, Na₃V₂(PO₄)₃, Na₂Fe₂(SO₄)₃, NaFePO₄, Na₃V₂(PO₄)₂F₃, and Na₄Co₃(PO₄)₂(P₂O₇).

In some embodiments, the modified compound of each of the above materials may be a doping modification and/or surface coating modification of the material.

The cathode film layer also optionally includes a binder, a conductive agent and other optional additives.

As an example, the conductive agent may be one or more of superconducting carbon, acetylene black, carbon black, Ketjen black, a carbon dot, a carbon nanotube, Super P (SP), graphene, and a carbon nanofiber.

As an example, the binder may be one or more of styrene-butadiene rubber (SBR), water-based acrylic resin, polyvinylidene fluoride (PVDF), polytetrafluoroethylene (PTFE), ethylene vinyl acetate copolymer (EVA), polyacrylic acid (PAA), carboxymethyl cellulose (CMC), polyvinyl alcohol (PVA), and polyvinyl butyral (PVB).

### Separator

In some embodiments, the secondary battery also includes a separator. The type of separator in the present application is not particularly limited, and any well-known porous separators with good chemical stability and mechanical stability may be used.

In some embodiments, the separator may be made of at least one selected from glass fiber, non-woven fabrics, polyethylene, polypropylene, and polyvinylidene difluoride. The separator may be a single-layer film or a multi-layer composite film, with no particular limitations thereto. When the separator is a multi-layer composite film, the materials of the layers may be the same or different, with no particular limitations thereto.

### Electrolyte

The secondary battery may include an electrolyte, which for ion conduction between the cathode and the anode. The electrolyte may include an electrolyte salt and a solvent.

As an example, the electrolyte salt may be one or more selected from lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro(bisoxalato)phosphate (LiDFOP), and lithium tetrafluoro(oxolato)phosphate (LiTFOP).

As an example, the solvent may be one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), methyl ethyl sulfone (EMS) and diethyl sulfoxide (ESE).

In some embodiments, the electrolyte also includes an additive. For example, the additive may include an anode film-forming additive, and may include a cathode film-forming additive, and may also include an additive that improves certain battery properties, such as an additive that improves battery overcharge performance, an additive that improves battery high-temperature performance, an additive that improves battery low-temperature performance, and the like.

In some embodiments, the secondary battery of the present application is a lithium-ion secondary battery.

The secondary battery may be prepared according to the conventional method in the art, for example, the cathode plate, the separator, and the anode plate are wound (or stacked) in order, so that the separator is between the cathode plate and the anode plate to provide isolation, and a cell is obtained, and the cell is placed in an outer packaging, filled with electrolyte and sealed to obtain the secondary battery.

The shape of the secondary battery is not particularly limited in embodiments of the present application and may be cylindrical, square, or any other shape. FIG. 2 is an exemplary secondary battery 5 with a square structure.

In some embodiments, the secondary battery may include an outer packaging. The outer packaging is used to encapsulate the cathode plate, the anode plate, and the electrolyte.

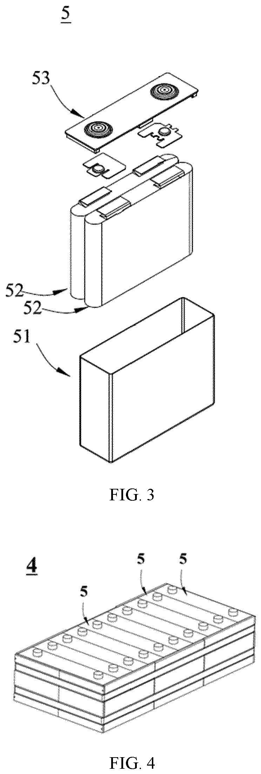

In some embodiments, referring to FIG. 3, the outer packaging may include a casing 51 and a cover plate 53. The casing 51 may include a bottom plate and side plates attached to the bottom plate, and the bottom plate and the side plates enclose an accommodating cavity. The casing 51 has an opening communicated with the accommodating cavity, and the cover plate 53 may cover the opening to close the accommodating cavity.

The cathode plate, the anode plate and the separator may be wound or laminated to form an electrode assembly 52. The electrode assembly 52 is encapsulated in the accommodating cavity. The electrolyte is infiltrated into the electrode assembly 52. The number of the electrode assembly 52 in the secondary battery 5 may be one or multiple, which may be adjusted according to requirements.

In some embodiments, the outer packaging of the secondary battery may be a hard case, such as a hard plastic case, aluminum case, steel case, etc. The outer packaging of the secondary battery may also be a soft pack, such as a pouch-type soft pack. The material of the soft pack may be plastic, for example, may include one or more of polypropylene (PP), polybutylene terephthalate (PBT), polybutylene succinate (PBS), etc.

In some embodiments, secondary batteries may be assembled into a battery module, and the number of the secondary batteries contained in the battery module may be multiple, and the exact number may be adjusted according to the application and capacity of the battery module.

FIG. 4 shows an exemplary battery module 4. In the battery module 4, a plurality of secondary batteries 5 may be arranged sequentially along the length of the battery module 4. Of course, the secondary batteries may also be arranged in any other manner. Further, the plurality of secondary batteries 5 may be secured by a fastener.

Optionally, the battery module 4 may also include a housing having a receiving space for receiving a plurality of secondary batteries 5.

In some embodiments, the above battery module may also be assembled into a battery pack, where the number of the battery modules contained in the battery pack may be adjusted according to the application and capacity of the battery pack.

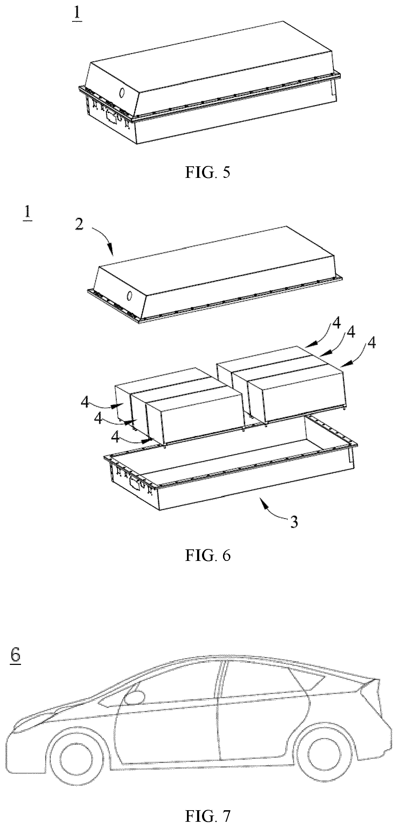

FIGS. 5 and 6 show an exemplary battery pack 1. The battery pack 1 includes a battery container and a plurality of battery modules 4 disposed in the battery container. the battery container includes an upper container body 2 and a lower container body 3, the upper container body 2 is able to cover the lower container body 3 and form an enclosed space for accommodating the battery modules 4. The plurality of battery modules 4 may be arranged in the battery container in any manner.

### Electric device

The present application also provides an electric device, the electric device includes at least one of the secondary battery, the battery module, or the battery pack. The secondary battery, the battery module, or the battery pack may be used as a power source for the device, or may serve as an energy storage unit for the device. The device may be, but is not limited to, a mobile device (e.g., cell phone, laptop, etc.), an electric vehicle (e.g., pure electric vehicle, hybrid electric vehicle, plug-in hybrid electric vehicle, electric bicycle, electric scooter, electric golf cart, electric truck, etc.), an electric train, a ship and satellite, an energy storage system, etc.

The device may select a secondary battery, a battery module or a battery pack depending on the needs of the use thereof.

FIG. 7 shows an exemplary device. The electric device 6 is a pure electric vehicle, a hybrid electric vehicle, or a plug-in hybrid electric vehicle, etc. To satisfy the high power and high energy density requirements of the secondary battery for this device, a battery pack or a battery module may be used.

As another example, the device may be a cell phone, a tablet, a laptop, etc. The device normally requires compactness and lightness and may employ a secondary battery as a power source.

The advantageous effects of the present application are further described below in conjunction with examples.

### Examples

In order to make the technical problems to be solved, the technical proposals and the advantageous effects of the present application clearer, the following will be further described in detail with the embodiments and the accompanying drawings. Obviously, the described embodiments are only a part of the embodiments of the present application, and not all of them. The following description of at least one exemplary embodiment is in fact merely illustrative and not intended to limit the present application and applications thereof in any way. Based on the embodiments in the present application, all other embodiments obtained by a person of ordinary skill in the art without creative effort fall within the scope of protection of the present application.

The materials used in the examples of the present application are commercially available.

### I. Preparation and performance test of styrene-acrylic emulsion

### 1. Preparation of styrene-acrylic emulsions 1-9

The monomers for the preparation of the styrene-acrylic emulsions 1-9 included, by mass content, 30%-80% of styrene monomers, 20%-70% of acrylate monomers and 0-10% of functional monomers. In addition to the above-mentioned monomers, the raw materials for the preparation of the styrene-acrylic emulsions included an emulsifier, an initiator, a pH adjusters and water.

The initiator was ammonium persulfate, the mass thereof was 0.5% of the total mass of the monomers for the preparation;

The emulsifier was allyloxy nonylphenol polyoxyethylene ether ammonium sulfate, the mass thereof was 0.7%-5% of the total mass of the monomers for the preparation, the specific content is as shown in Table 1;

The pH adjuster was sodium hydroxide, the mass thereof was 0.2% of the total weight of the monomers for the preparation;

The mass of water was 150% of the total weight of monomers for the preparation.

The preparation steps were as follows.

Pre-emulsification process: 3/4 by mass of the water, the emulsifier, the acrylate monomers, the styrene monomers and the functional monomers were stirred at 50°C for 1 hr to produce a homogeneous and stable, non-stratified pre-emulsion and left for subsequent use.

Seed emulsion preparation: 1/4 by mass of water, the emulsifier, the acrylate monomers, the styrene monomers, and the functional monomers were stirred at 50°C for 1 hr, 1/4 by mass of the initiator was added to initiate polymerization to obtain a seed emulsion.

Continuous dropwise addition stage: drop the pre-emulsion was added dropwise into the seed emulsion for 2 hrs and then the remaining 3/4 by mass of initiator was added. After the end of dropwise addition, the reaction was carried out for 0.5 hr, and the free monomers that had not been reacted were removed by holding at 85°C for 3 hrs.

Final treatment stage: the system was cooled to 40°C, adjusted between 8 and 9 with the pH adjuster and filtered, and the material was obtained.

The difference between styrene-acrylic emulsions 1-9 is the difference in the amount of the emulsifier, as shown in Table 1;

### 2. Performance test of styrene-acrylic emulsions

1) The particle size of the above-mentioned styrene-acrylic emulsions was tested by a laser particle size analyzer, the instrument used was Mastersizer 3000. specific steps were as follows: parameters of the styrene-acrylic emulsion was input when testing, including, a refractive index of 1.42, an absorbance of 0.1, a dispersant of water, and a dispersant refractive index of 1.33; no additional processing were performed on the sample to be tested, the sample was stirred uniformly and added directly to the sample cell until the shading rate was 5%-20%, and the measurement was started and data was recorded. The particle size Dv50 of latex particles (styrene acrylate copolymer) in the styrene-acrylic emulsion was measured.
(2) The above-mentioned styrene-acrylic emulsion was dried at 80°C for 12 hrs to prepare a latex film, and the glass transition temperature of the styrene acrylate copolymer was tested by differential scanning calorimetry analysis with the instrument of NETZSCH DSC200F3.

The monomers for the preparation, the preparation parameters and the results of the performance tests for styrene-acrylic emulsions 1-9 are shown in Table 1 below:

**Table 1**

| Emulsion | Styrene-based monomer | Acrylate monomer | Functional monomer | Emulsifie r | Particle size Dv50 | Glass transition temperature |
|---|---|---|---|---|---|---|
| Styrene-acrylic emulsion 1 | Styrene 50% | Methyl acrylate 47% | Acrylic acid 3% | 4.30% | 350nm | 16°C |
| Styrene-acrylic emulsion 2 | Styrene 50% | Methyl acrylate 47% | Acrylic acid 3% | 3.50% | 450nm | 17°C |
| Styrene-acrylic emulsion 3 | Styrene 50% | Methyl acrylate 47% | Acrylic acid 3% | 2.70% | 600nm | 16°C |
| Styrene-acrylic emulsion 4 | Styrene 50% | Methyl acrylate 47% | Acrylic acid 3% | 1.80% | 800nm | 18°C |
| Styrene-acrylic emulsion 5 | Styrene 50% | Methyl acrylate 47% | Acrylic acid 3% | 1.00% | 900nm | 16°C |
| Styrene-acrylic emulsion 6 | Styrene 50% | Methyl acrylate 47% | Acrylate phosphate 3% | 3.50% | 450nm | 15°C |
| Styrene-acrylic emulsion 7 | Styrene 70% | Methyl acrylate 27% | Acrylic acid 3% | 3.70% | 450nm | 28°C |
| Styrene-acrylic emulsion 8 | Styrene 60% | Ethyl acrylate 10% + n-butyl methacrylate 30% | / | 3.60% | 450nm | 60°C |
| Styrene-acrylic emulsion 9 | Styrene 70% | Ethyl acrylate 8% + n-butyl methacrylate 22% | / | 3.60% | 450nm | 70°C |
| Styrene-acrylic emulsion 10 | Styrene 50% | Methyl acrylate 47% | Acrylic acid 3% | 5.20% | 280nm | 16°C |
| Styrene-acrylic emulsion 11 | Styrene 50% | Methyl acrylate 47% | Acrylic acid 3% | 6.00% | 200nm | 16°C |

### II. Preparation and performance test of anode plate

### 1. Preparation of anode plate

### Anode plates 1-9

94% by mass of a hard carbon material 1 (anode active material), 1.0 % by mass of conductive carbon black (SP), styrene-acrylic emulsion (as a binder, the styrene-acrylic emulsions 1-9 prepared by the above preparation processes, respectively, as styrene acrylate copolymer in which the mass of styrene acrylate copolymer was 4%), and 1.0% by mass of sodium carboxymethylcellulose were mixed and dissolved in deionized water to prepare an anode slurry. The anode slurry was then coated onto a copper foil with a thickness of 6 µm, dried and cold-pressed to form an anode active material layer, and cut into anode plates 1-9.

The hard carbon material 1 was irregular particles with a Dv50 particle size of 5 µm.

### Anode plates 10-11

The anode plate 10 was essentially the same as the anode plate 2, differing only in that the hard carbon material 1 therein was replaced by a hard carbon material 2 of equal mass, and the hard carbon material 2 was a spherical particle with a Dv50 particle size of 6 µm.

The anode plate 11 was essentially the same as the anode plate 2, differing only in that the hard carbon material 1 therein was replaced by a hard carbon material 3 of equal mass, and the hard carbon material 3 was a quasi-spherical particle with a Dv50 particle size of 5 µm.

### Anode plates 12-15

The anode plate 12 was essentially the same as the anode plate 2, differing only in that the styrene-acrylic emulsion 2 in the anode plate 2 was replaced by a butyl emulsion, and the emulsion spheres accounted for 4% by mass in the anode plate. The latex particles in the butyl emulsion had a Dv50 particle size of 120 nm.

The anode plate 13 was essentially the same as the anode plate 2, differing only in that the styrene-acrylic emulsion 1 in the anode plate 1 was replaced by a styrene-acrylic emulsion 10 having a Dv50 particle size of 280 nm, and the styrene acrylate copolymer accounted for 4% by mass in the anode plate.

The anode plate 14 was essentially the same as the anode plate 10, differing only in that the styrene-acrylic emulsion 2 in the anode plate 10 was replaced by a styrene-acrylic emulsion 10 having a Dv50 particle size of 280 nm, and the styrene acrylate copolymer accounted for 4% by mass in the anode plate.

The anode plate 15 was essentially the same as the anode plate 11, differing only in that the styrene-acrylic emulsion 2 in the anode plate 11 was replaced by a styrene-acrylic emulsion 11 having a Dv50 particle size of 200 nm, and the styrene acrylate copolymer accounted for 4% by mass in the anode plate.

### Anode plate 16

The anode plate 16 was essentially the same as the anode plate 2, differing only in that the hard carbon material 1 therein was replaced by graphite of equal mass, and the Dv50 particle size of the graphite was 13 µm.

### 2. Performance test of anode plates

### 1) The test method of the flexibility of the anode plates may be referred to the following:

The flexibility of the aforementioned anode plates was measured by a winding spindle, and a sample of 40 mm in length and width × 100 mm in length was prepared, wound around the special winding spindle, and the cracking of the plate was observed by a combination of visual inspection and microscopy to determine the flexibility level:
the diameter of the winding spindle was R;
no crack generated when R ≤ 1.0 mm, flexibility level I in conformity with the production requirements;
cracks generated when R = 1.0 mm and no crack generated when R = 2.0 mm, flexibility level II in conformity with the production requirements;
cracks generated when R = 2.0 mm and no crack generated when R = 3.0 mm, flexibility level III in conformity with the production requirements;
no crack generated when R = 3.0 mm, and cracks generated when R = 4.0 mm, flexibility level IV in conformity with the production requirements.

The preparation of the winding spindle was as follows:
Conventional 304 stainless steel bars with a diameter of 1.0 mm, 2.0 mm, 3.0 mm, and 4.0 mm were cut to obtain a 60 mm section respectively, welded on a 150 mm × 300 mm steel plate for fixing to obtain the winding spindle.

If the diameter of the winding spindle used was relatively small and the electrode plate did not crack, then the electrode plate had good flexibility; in contrast, if the diameter of the winding spindle used was large and the electrode plate cracked, then the electrode plate had poor flexibility.

### 2) Test method of binding force of the anode plates:

The anode piece to be tested was measured in a direction perpendicular to the machine direction (TD), and a specimen of 20 mm (width) × (100-160) mm (length) was prepared, and a special double-sided adhesive tape of 20 mm (width) × (90-150) mm (length) was adhered to a steel plate. After adhering the specimen to the double-sided tape, the specimen was rolled three times in the same direction with a 2 Kg hand roller. The binding force of the electrode plate was tested by a tension machine. A larger binding force between the film layer and the current collector in the hard-carbon electrode plate indicated a stronger interaction force between the active substance and the current collector in the hard-carbon electrode plate, and otherwise, it indicated a worse interaction force between the active substance and the current collector in the electrode plate.

### 3) Test method of cohesive force

The anode plate to be tested was measured along the direction perpendicular to the machine direction (TD), a specimen of 20mm (width) × 100 mm (length) was prepared, and a special double-sided tape was adhered on a steel plate, the size of the double-sided tape was 20 mm (width) × 100 mm (length). The prepared specimen was adhered to the double-sided tape, and then a green tape was attached to the electrode plate specimen, the size of the green tape was 20 mm (width) × 120 mm (length), the part of the green tape not in contact with the electrode plate was attached to a sheet of paper of 20 mm (width) × 60 mm (length), with the paper and the green tape aligned in a straight line, and the joint part between the green tape and the paper was adhered by a masking tape, in contact with the part of the green tape on the electrode plate, before testing, the electrode plate and the double-sided tape needed to be evenly and firmly compressed. The cohesive force of the electrode plate was tested by a tensile machine. A larger force between the active particles in the hard-carbon electrode plate indicated a stronger interaction force between the active substances in the hard-carbon electrode plate, and otherwise, it indicated a worse interaction force between the substances in the electrode plate.

The tapes used in the binding force testing and cohesive force testing were all commercially available ordinary tapes.

### III. Preparation of battery

1. Cathode plate: an active material LiNi_{0.8}Co_{0.1}Mn_{0.1}O₂, conductive carbon black (SP), polyvinylidene fluoride (PVDF) were mixed according to the mass ratio of 96.8:2.2:1, and dissolved in N-methylpyrrolidone (NMP), and the cathode slurry obtained was coated on an aluminum foil with a width of 400 mm, dried, cold pressed, and cut to obtain the cathode plate.
2. Separator: a polyethylene (PE) porous polymer separator was used as the separator.
3. Anode plate: the anode plates 1-16 prepared above were used.
4. Electrolyte: ethylene carbonate (EC), methyl ethyl carbonate (EMC), and diethyl carbonate (DEC) were mixed according to the volume ratio of 3:6: 1, a fully dried lithium salt (LiPF₆) was dissolved in the mixed organic solvent according to a concentration of 1 mol/L. The desired electrolyte was obtained.
5. Full battery assembly: the above cathode plate, the separator and the anode plate were stacked in order so that the separator was disposed between the cathode and the anode to provide separation, and were wound to obtain a bare cell. The bare cell was placed in an outer packaging aluminum case, the above prepared electrolyte was injected into the dried cell after high-temperature drying, followed by vacuum encapsulation, resting, formation, shaping and other the like to obtain lithium-ion secondary batteries 1-16, as shown in Table 2.

### IV. Evaluation of battery performance

The evaluation of the performances of batteries 1-16 was conducted according to the following methods.

### 1. Determination of direct current resistance (DCR) of batteries

The capacity at 25°C was tested for each battery, namely after the formation of the battery, the battery was left at 25°C for 10 min and charged at 0.33 C to 100% state of charge (SOC), left to stand for 10 min after depolarization at low current, and then the battery was discharged at 0.33 to 0% SOC, the capacity obtained was the 0.33C capacity of the battery. Then the battery was charged at a constant voltage at 0.05 C, left for 60 min, discharged at 0.33 C to 50% SOC, left for 60 min, discharged at 0.33 C to 20% SOC, left for 60 min, and discharged at 0.33C to 0% SOC, the open circuit voltage of 0% SOC was then tested, and the DCR data at 30 s was sorted.

### 2. Test of cycling performance

The first charging and discharging were carried out at a constant temperature of 25°C, the battery was charged at a charging current of 1.0 C (i.e., the current to completely discharge the theoretical capacity in 1 hour) under a constant current and constant voltage (to a current of 0.05 C) until the upper limit voltage of 4.25 V was reached, and after standing for 5 minutes, the battery was discharged at a constant discharging current of 1.0 C until the final voltage was 2.8 V, the discharge capacity of the first cycle was recorded; and then continuous charging and discharging cycles were carried out.

Capacity retention rate of the nth cycle = (the discharge capacity of the n^{th} cycle! discharge capacity of the first cycle) × 100%, the tested was stopped when the capacity retention rate of the cycle reached 80% to obtain the number of cycles at this point.

Some of the raw materials and results from the performance test of the anode plates 1-16 are shown in Table 2 below:

**Table 2**

| Item | Battery | Electrode plate | Anode active materia l | Binder | Coating weight of anode active material layer g/cm² | Flexib ility | Binding force N/m | Cohesive Force N/m | DCR /mΩ | Cycle perform ance/ No. of cycles at 25°C |
|---|---|---|---|---|---|---|---|---|---|---|
| Example 1 | Battery 1 | Anode plate 1 | Hard carbon material 1 | Styrene-acrylic emulsion 1 | 10 | Level I | 36 | 520 | 28 | 1550 |
| Example 2 | Battery 2 | Anode plate 2 | Hard carbon material 1 | Styrene-acrylic emulsion 2 | 12 | Level I | 38 | 580 | 25 | 1600 |
| Example 3 | Battery 3 | Anode plate 3 | Hard carbon material 1 | Styrene-acrylic emulsion 3 | 11 | Level I | 38 | 578 | 24 | 1570 |
| Example 4 | Battery 4 | Anode plate 4 | Hard carbon materiala 1 | Styrene-acrylic emulsion 4 | 11 | Level I | 37 | 557 | 23 | 1575 |
| Example 5 | Battery 5 | Anode plate 5 | Hard carbon materiala 1 | Styrene-acrylic emulsion 5 | 7 | Level I | 24 | 260 | 29 | 1271 |
| Example 6 | Battery 6 | Anode plate 6 | Hard carbon materiala 1 | Styrene-acrylic emulsion 6 | 11 | Level I | 35 | 513 | 24 | 1576 |
| Example 7 | Battery 7 | Anode plate 7 | Hard carbon materiala 1 | Styrene-acrylic emulsion 7 | 10 | Level I | 37 | 684 | 26 | 1553 |
| Example 8 | Battery 8 | Anode plate 8 | Hard carbon material 1 | Styrene-acrylic emulsion 8 | 10 | Level II | 40 | 786 | 27 | 1679 |
| Example 9 | Battery 9 | Anode plate 9 | Hard carbon material 1 | Styrene-acrylic emulsion 9 | 5 | Level IV | 42 | 787 | 40 | 1232 |
| Example 10 | Battery 10 | Anode plate 10 | Hard carbon material 2 | Styrene-acrylic emulsion 2 | 12 | level I | 39 | 600 | 25 | 1600 |
| Example 11 | Battery 11 | Anode plate 11 | Hard carbon material 3 | Styrene-acrylic emulsion 2 | 12 | level I | 38 | 593 | 24 | 1620 |
| Comparative example 1 | Battery 12 | Anode plate 12 | Hard carbon material 1 | Styrene-butadiene emulsion | 5 | Level IV | 2 | 20 | 47 | 684 |
| Comparative example 2 | Battery 13 | Anode plate 13 | Hard carbon material 1 | Styrene-acrylic emulsion 10 | 8 | Level II | 3 | 35 | 28 | 1168 |
| Comparative example 3 | Battery 14 | Anode plate 14 | Hard carbon materia l 2 | Styrene-acrylic emulsion 10 | 8 | Level II | 4 | 44 | 26 | 1031 |
| Comparative example 4 | Battery 15 | Anode plate 15 | Hard carbon materia l 3 | Styrene-acrylic emulsion 11 | 8 | Level III | 2 | 23 | 34 | 897 |
| Comparative example 5 | Battery 16 | Anode plate 16 | Graphit e | Styrene-acrylic emulsion 2 | 11 | level I | 15 | 200 | 40 | 1577 |

Due to the brittleness of the hard carbon particles in the anode plate 12 from Comparative example 1, the binding force of the anode plate made of styrene butadiene rubber (SBR) as the binder was low and the cohesion of the anode active material layer was poor, with low flexibility and high hardness and brittleness, thus the DCR of the resulting battery was large and the cycling performance was poor.

The hard carbon material in the anode plate 13 from Comparative example 2 was irregular particles, and the styrene-acrylic emulsion 10 with a Dv50 particle size of 280 nm was used as the binder. Due to the small particle size of the styrene acrylate copolymer contained therein, the binding force and cohesive force were 3 N/m and 35 nm, respectively, which were still very low compared with those in the examples, and therefore the cycling performance thereof was poor.

The hard carbon materials in the anode plates 14-15 from Comparative examples 3-4 were spherical and quasi-spherical particles, respectively, and the styrene-acrylic emulsion 10 with a Dv50 particle size of 280 nm and the styrene-acrylic emulsion 11 with a Dv50 particle size of 200 nm were used as the binder, respectively, although the binding force and cohesive force of the anode plates prepared therefrom were slightly improved compared with those in Comparative examples 2-3, however, they were still low compared with those in the examples, so the cycling performance thereof was poor.

In the anode plate 16 from Comparative example 5, graphite was used as the anode active material, and the styrene-acrylic emulsion 2 was used as the binder. The binding force of the anode plate and the cohesive force of the anode active material layer were still lower than those of Example 2, indicating that the styrene-acrylic emulsion as the binder has a better improvement effect on the binding force of the anode plate and the cohesive force of the anode active material layer in the case that the anode active material was hard carbon.

The Dv50 particle sizes of the styrene acrylate copolymer in the styrene-acrylic emulsion used in the anode plates from Examples 1-5 were 350 nm-900 nm, all of which showed better flexibility, binding and cohesive capability. Further, compared with Example 5, the anode plates prepared in Examples 1-4 had better flexibility, binding and cohesion capability, and the secondary batteries made had smaller DCR and better cycling performance; a smaller DCR indicates better high-current discharge capability. Therefore, the preferred Dv50 particle size of styrene acrylate copolymer is 350 nm-800 nm.

The Dv50 particle size of the styrene acrylate copolymer in the styrene-acrylic emulsion used in the anode plates of Examples 6-9 was 450 nm. The main difference was that the composition of the monomer in the styrene acrylate copolymer was different, which led to a different glass transition temperature. It can be found that the styrene acrylate copolymers having a glass transition temperature in the range of 15°C-70°C all showed better flexibility, higher binding and cohesive forces and better cycling performance. Further, compared to Example 9, the anode plates of Examples 6-7 have better flexibility and cycling performance and smaller DCR; therefore, the preferred glass transition temperature of the styrene acrylate copolymer is 15°C-60°C.

Examples 10-11 illustrate that the Dv50 particle sizes of styrene acrylate copolymer in the styrene-acrylic emulsion used in the anode plates were in the range of 350 nm-900 nm, which was also suitable for hard carbon materials having spherical particles or quasi-spherical particles, and the binding force of the corresponding anode plate and the cohesive of the anode active material layer can be improved.

The above is only specific embodiments of the application, but the protection scope of the present application is not limited thereto. Any person familiar with the technical field can easily think of various equivalent modifications or replacements within the technical scope disclosed in the present application, and these modifications or replacements should fall within the scope of protection of the present application. Therefore, the scope of protection of the present application should be defined by the protection scope of the claims.

## Claims

1. A styrene-acrylic emulsion, wherein a Dv50 particle size of a latex particle in the styrene-acrylic emulsion is 350-900 nm, optionally 350-800 nm.

2. The styrene-acrylic emulsion as claimed in claim 1, wherein the latex particle is a styrene acrylate copolymer, the styrene acrylate copolymer has a glass transition temperature in a range of 10-70°C, optionally 10-60°C.

3. A preparation method for the styrene-acrylic emulsion as claimed in any of claims 1 to 2, comprising the following steps:
preparing a pre-emulsion by mixing a portion of an emulsifier, a portion of an acrylate-based monomer, and a portion of a styrene-based monomer with water;
preparing a seed emulsion by mixing another portion of the emulsifier, another portion of the acrylate-based monomer, and another portion of the styrene-based monomer with water, with an addition of an initiator to initiate polymerization; and
adding the pre-emulsion to the seed emulsion dropwise and adding an initiator to carry out a polymerization reaction to produce a styrene-acrylic emulsion having the latex particle with the Dv50 particle size of 350-900 nm;
wherein, a total mass of the emulsifier is 0.7%-5% of a total mass of monomers for preparation, optionally 1%-4.5%; the monomers for the preparation comprise the acrylate-based monomer and the styrene-based monomer.

4. The preparation method as claimed in claim 3, wherein with respect to the total mass of the monomers for the preparation, the styrene-acrylic emulsion comprises 30%-80% by mass of the styrene-based monomer, 20%-70% by mass of the acrylate-based monomer and 0-10% by mass of a functional monomer;
optionally, the functional monomer is added in the step of preparing the pre-emulsion and/or the seed emulsion;
optionally, the functional monomer is at least one of an acrylic-based monomer, an organophosphate monomer and a fluorinated acrylate-based monomer.

5. An anode plate, comprising:
an anode current collector; and
an anode active material layer disposed on at least one surface of the anode current collector, wherein the anode active material layer comprises a hard carbon material and a binder, the binder is derived from the styrene-acrylic emulsion as claimed in any of claims 1 to 2.

6. The anode plate as claimed in claim 5, wherein components of the anode active material layer further comprise a conductive agent and a dispersant; the hard carbon material accounts for 85%-97% by mass, the styrene acrylate copolymer accounts for 1%-8% by mass, the conductive agent accounts for 0.3%-5% by mass, and the dispersant accounts for 0.5%-4% by mass of the anode active material layer.

7. The anode plate as claimed in any of claims 5 to 6, wherein, the anode active material layer has a coating weight of 2-13 mg/cm², optionally 5-12 mg/cm².

8. The anode plate as claimed in any of claims 5 to 7, wherein a morphology of the hard carbon material is at least one of an irregular particle, a spherical particle and a quasi-spherical particle, optionally, the hard carbon material is an irregular particle.

9. The anode plate as claimed in any of claims 5 to 8, wherein the hard carbon material has a Dv50 particle size of 1-10 µm, optionally 4-9 µm.

10. The anode plate as claimed in any of claims 5 to 9, wherein a morphology of the hard carbon material is an irregular particle and a binding force between the anode active material layer and the anode current collector is 10-40 N/m; a cohesive force of the anode active material layer is in a range of 150-800 N/m.

11. The anode plate as claimed in any of claims 5 to 9, wherein the hard carbon material is at least one of a spherical particle and a quasi-spherical particle, and a binding force between the anode active material layer and the anode current collector is 10-30 N/m; a cohesive force of the anode active material layer is in a range of 150-600 N/m.

12. A secondary battery, comprising the anode plate as claimed in any of claims 5 to 11.

13. An electric device, comprising the secondary battery as claimed in claim 12.
